(19) Europäisches Patentamt
European Patent Office
Office européen des brevets

(11) **EP 3 641 311 A1**

(12) **EUROPEAN PATENT APPLICATION**

(43) Date of publication:
**22.04.2020 Bulletin 2020/17**

(51) Int Cl.:
*H04N 19/119* (2014.01)       *H04N 19/172* (2014.01)
*H04N 19/96* (2014.01)        *H04N 19/463* (2014.01)
*H04N 19/16* (2014.01)

(21) Application number: **18306368.4**

(22) Date of filing: **18.10.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **InterDigital VC Holdings, Inc.**
**Wilmington, DE 19809 (US)**

(72) Inventors:
• **GALPIN, Franck**
  **35576 Cesson-Sévigné Cedex (FR)**
• **RACAPE, Fabien**
  **35576 Cesson-Sévigné Cedex (FR)**
• **BORDES, Philippe**
  **35576 Cesson-Sévigné Cedex (FR)**
• **URBAN, Fabrice**
  **35576 Cesson-Sévigné Cedex (FR)**

(74) Representative: **Huchet, Anne**
**InterDigital CE Patent Holdings**
**20, rue Rouget de Lisle**
**92130 Issy-les-Moulineaux (FR)**

(54) **ENCODING AND DECODING METHODS AND APPARATUS**

(57)     A decoding method is disclosed. First, at least one shift is obtained. The shift if a shift of a grid of non-overlapping blocks in a picture. and shifting the grid is then shifted responsive to the obtained shift. Finally, each non-overlapping block in the picture is decoded using the shifted grid.

Figure 2A

**Description**

1. TECHNICAL FIELD

The present embodiments generally relate to a method and an apparatus for video encoding or decoding, and more particularly, to a method and an apparatus for video encoding or decoding using non-overlapping blocks.

2. BACKGROUND ART

To achieve high compression efficiency, image and video coding schemes usually employ prediction and transform to leverage spatial and temporal redundancy in the video content. Generally, intra or inter prediction is used to exploit the intra or inter frame correlation, then the differences between the original image block and the predicted image block, often denoted as prediction errors or prediction residuals, are transformed, quantized and entropy coded. During encoding the original image block is usually partitioned/split into sub-blocks possibly using quad-tree partitioning. To reconstruct the video, the compressed data is decoded by inverse processes corresponding to the prediction, transform, quantization and entropy coding.

3. BRIEF SUMMARY

One or more of the present embodiments provide a decoding method comprising:

- obtaining at least one shift of a grid of non-overlapping blocks in a picture and shifting the grid responsive to said shift; and
- decoding each non-overlapping block in the picture using the shifted grid.

One or more of the present embodiments provide an encoding method comprising:

- obtaining at least one shift of a grid of non-overlapping blocks in a picture and shifting the grid responsive to said shift; and
- encoding each non-overlapping block in the picture using the shifted grid.

One or more of the present embodiments provide a decoding apparatus comprising one or more processors configured to perform:

- obtaining at least one shift of a grid of non-overlapping blocks in a picture and shifting the grid responsive to said shift; and
- decoding each non-overlapping block in the picture using the shifted grid.

One or more of the present embodiments provide an encoding apparatus comprising one or more processors configured to perform:

- obtaining at least one shift of a grid of non-overlapping blocks in a picture and shifting the grid responsive to said shift; and

    - encoding each non-overlapping block in the picture using the shifted grid.

One or more of the present embodiments also provide a computer readable storage medium having stored thereon instructions for encoding or decoding video data according to at least part of any of the methods described above. One or more embodiments also provide a computer readable storage medium having stored thereon a bitstream generated according to the encoding methods described above. One or more embodiments also provide a method and apparatus for transmitting or receiving the bitstream generated according to the encoding methods described above. One or more embodiments also provide a computer program product including instructions for performing at least part of any of the methods described above.

4. BRIEF SUMMARY OF THE DRAWINGS

Figure 1A depicts a classical splitting of a picture into Coding Tree Units (CTU);
Figure 1B depicts a splitting of a picture into Coding Tree Units (CTU) according to an embodiment;
Figure 2A illustrates a flowchart of a decoding method according to one embodiment;
Figure 2B illustrates a flowchart of an encoding method according to one embodiment;
Figure 3A illustrates a flowchart of an encoding method according to one embodiment;
Figure 3B, 3C and 3D illustrate flowcharts of decoding methods according to various embodiments;
Figures 4, 5 and 6 depicts the splitting of a CTU into CUs according to one embodiment;
Figure 7A depicts a flowchart of a decoding method according to an embodiment;
Figure 7B depicts a flowchart of an encoding method according to an embodiment;
Figure 8 represents a picture split using a classical splitting method;
Figure 9 represents a picture split using a splitting method of one embodiment;
Figure 10 illustrates a block diagram of a video encoder according to an embodiment;
Figure 11 illustrates a block diagram of a video decoder according to an embodiment; and
Figure 12 illustrates a block diagram of an example of a system in which various aspects and embodiments are implemented.

## 5. DETAILED DESCRIPTION

In HEVC coding, a picture is partitioned into CTUs of square shape with a configurable size typically 64x64. The size may be 128x128, or 256x256 in other video coding standards. A CTU is the root of a quad-tree partitioning into 4 square Coding Units (CU) of equal size, i.e. half of the parent block size in width and in height. A quad-tree is a tree in which a parent node can be split into four child nodes, each of which may become parent node for another split into four child nodes. In HEVC, a coding Block (CB) is partitioned into one or more Prediction Blocks (PB) and forms the root of a quadtree partitioning into Transform Blocks (TBs). Corresponding to the Coding Block, Prediction Block and Transform Block, a Coding Unit (CU) includes the Prediction Units (PUs) and the tree-structured set of Transform Units (TUs), a PU includes the prediction information for all color components, and a TU includes residual coding syntax structure for each color component. The size of a CB, PB and TB of the luma component applies to the corresponding CU, PU and TU.

In more recent encoding systems, a CTU is the root of a coding tree partitioning into Coding Units (CU). A coding tree is a tree in which a parent node (usually corresponding to a CU) can be split into child nodes (e.g. into 2, 3 or 4 child nodes), each of which may become parent node for another split into child nodes. In addition to the quad-tree split mode, new split modes (binary tree symmetric split modes, binary tree asymmetric split modes and triple tree split modes) are also defined that increase the total number of possible split modes. The coding tree has a unique root node, e.g. a CTU. A leaf of the coding tree is a terminating node of the tree. Each node of the coding tree represents a CU that may be further split into smaller CUs also named sub-CUs or more generally sub-blocks. Once the partitioning of a CTU into CUs is determined, CUs corresponding to the leaves of the coding tree are encoded. The partitioning of a CTU into CUs and the coding parameters used for encoding each CU (corresponding to a leaf of the coding tree) may be determined on the encoder side through a rate distortion optimization procedure. There is no partitioning of a CB into PBs and TBs, i.e. a CU is made of a single PU and a single TU.

In the present application, the term "block" or "picture block" can be used to refer to any one of a CTU, a CU, a PU, a TU, a CB, a PB and a TB. In addition, the term "block" or "picture block" can be used to refer to a macroblock, a partition and a sub-block as specified in H.264/AVC or in other video coding standards, and more generally to refer to an array of samples of numerous sizes.

In the present application, the terms "reconstructed" and "decoded" may be used interchangeably, the terms "pixel" and "sample" may be used interchangeably, the terms "image," "picture" and "frame" may be used interchangeably. Usually, but not necessarily, the term "reconstructed" is used at the encoder side while "decoded" is used at the decoder side.

At least one embodiment relates to video coding using frame partitioning into non-overlapping large square blocks, e.g. Coding Tree Units (CTU) in HEVC or Super Blocks in AV1.
These blocks are then split into smaller blocks or Coding units (CU) following a recursive tree. In HEVC and AV1, the maximum size of blocks is set to 64x64. This size is likely to increase to at least 128x128 in the next standard H.266/VVC (Versatile Video Coding) under study by the Joint Video Expert Team (JVET).
The improvement in coding efficiency when using big blocks can be explained at least by the following reasons:

- When it is possible to well predict and encode a large block, it reduces the cost of the syntax that describes coding tools: intra prediction, transform, compared to coding the same area with smaller blocks. The encoder aims at finding a good compromise between the coding cost of residues between the prediction and source signal and the cost of the syntax, at a given target quality.

- The Rate Distortion Optimization (RDO) at the encoder side, which is in charge of partitioning the CTUs, can consider a larger area for partitioning decisions, which results in better choices of segmentation.

When the size of encoded frames is not multiple of the size of CTUs, the last row and/or column of CTUs comprise truncated blocks which challenge encoders for splitting in an optimal way. Borders of the images can thus play a significant role in the overall compression efficiency.

Intra prediction relies on the correlation between previously reconstructed neighboring samples at the top and the left of the current block. When encoding a CTU of the first row or the first column, in particular in Intra Slices, encoders cannot well predict border blocks since there is no or few available causal samples to base the prediction on. For example, if the first block of the frame that is considered by the RDO is a square 64x64 block. The initial prediction includes filling reference samples, which are outside the picture, with the value corresponding to the half of the signal's dynamic range. The prediction block then contains a single value. The prediction block is thus not a good predictor. Such a prediction thus results in a high energy residual to encode. Splitting the block into smaller blocks enables to encode and reconstruct small blocks at the border and then predict the next blocks with more relevant reference samples.

Inter prediction may also be affected since bordering information is sometimes missing from one frame to another, depending on camera motion and object entering or exiting the video frame. It can then be relevant to adapt the partitioning into blocks by choosing big blocks where the information is consistent and by choosing smaller blocks at image borders.

Video compression standards have dealt with the partitioning of a frame with dimensions not being a multiple of the root block size. However, it has been treated as a splitting problem of the last row or column.

At least one embodiment proposes to efficiently partition a slice, a tile or a frame of video content, when its size does not correspond to a multiple of the root block size, e.g. CTUs in HEVC.

At least one embodiment proposes to modify the overall partitioning of frames into CTUs to optimize the coding of picture borders. For instance, in intra, the grid of CTUs can be aligned on the bottom right of the frames, instead of the top left of the frames. In the case where the width, resp. height, of the frames is not a multiple of the CTU width, resp. height, the first column, resp. row, of CTUs contains smaller blocks, while the last column, resp. row, now contains full size CTUs.

The first blocks are anyway often split into smaller blocks at the top and the left of the frames. Considering smaller CTUs does not affect much the efficiency of encoding these areas. However, at the right and bottom of frames, the encoder can consider larger blocks. The causal information for intra prediction is available, resulting in better RDO choices.

The advantages of shifting of CTU partitioning are mainly due to the intra prediction process. In intra slices, the border blocks at the top and the left get a poor prediction due to the lack of reconstructed reference samples. It is also the case for many border blocks in inter slices, since at borders, motion estimation may fail when the motion results in a corresponding texture out of the reference frame. The encoder RDO then chooses to split big blocks into smaller blocks to be able to predict a larger part of the CTU using reconstructed blocks.

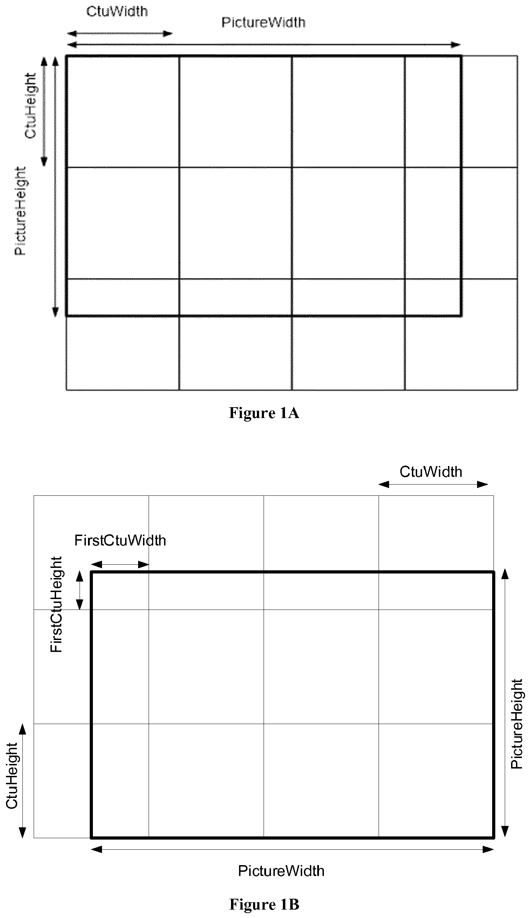

As previously explained, classical codecs position the first CTU at the top left corner of the picture, which may result in truncated CTUs at bottom and right of the picture. **Figure 1A** shows an exemplary picture split the classical way. In the case where the width and the height of the picture do not correspond to multiples of the CTU size, the last column and/or row contain truncated CTUs.

In the following figures, the borders of the picture are represented using thick lines and CTUs/CUs using thin lines. Modifying the starting location of CTUs has an impact on the implicit splitting of CTUs belonging to the first row and/or column.

In one embodiment, the starting coordinates of the top-left corner of CTUs are determined as follows:

$$initCtuPosX = (PictureWidth \% CtuWidth) - CtuWidth \text{ (eq. 1)}$$

$$initCtuPosY = (PictureHeight \% CtuHeight) - CtuHeight \text{ (eq. 2)}$$

Where *PictureWidth* corresponds to the width of the picture or slice/tile to encode and *CtuWidth* corresponds to the initial width of the CTUs. % is the modulo operator. *initCtuPosX* and *initCtuPosY* are negative numbers when the corresponding dimension is not a multiple of the CTU size.

The dimensions of the CTUs of the first row and the first column of CTUs then correspond to

$$firstCtuWidth = CtuWidth + initCtuPosX$$

$$firstCtuHeight = CtuHeight + initCtuPosY$$

The repositioning of the CTU grid is depicted in **Figure 1B**. As can be seen, the first row and first column are split into CUs in a particular manner that fit the borders of pictures.

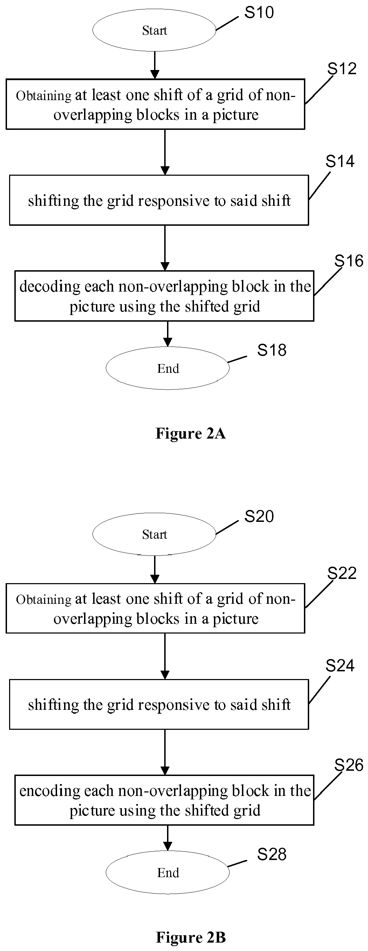

**Figure 2A** illustrates a flowchart of a decoding method according to one embodiment. The method starts at S10. At S12, at least one shift of a grid of non-overlapping blocks, e.g. large blocks such as CTUs, in a picture is obtained, e.g. decode from a bitstream or determined from other parameters. At S14, the grid is shifted responsive to the obtained shift. At S16, each non-overlapping block is decoded using the shifted grid. The method ends at S18.

**Figure 2B** illustrates a flowchart of an encoding method according to one embodiment. The method starts at S20. At S22, at least one shift of a grid of non-overlapping blocks, e.g. large blocks such as CTUs, in a picture is obtained, e.g. determined from other parameters. At S24, the grid is shifted responsive to the obtained shift. At S26, each non-overlapping block is encoded using the shifted grid. The obtained at least one shift may also be encoded. The method ends at S28.

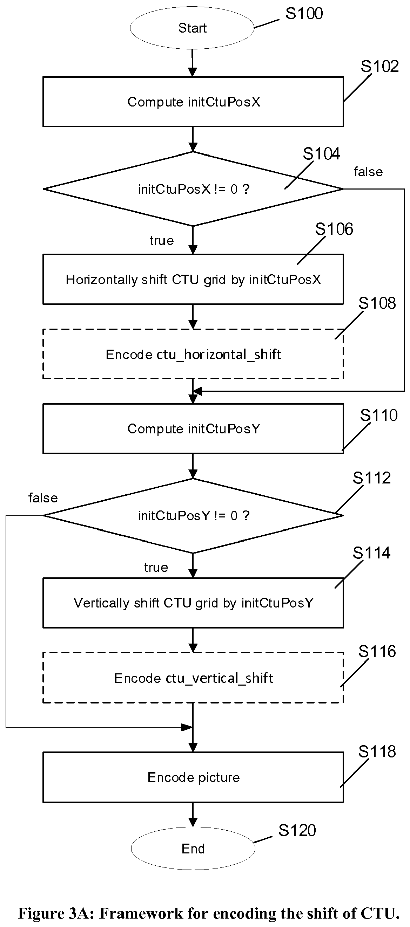

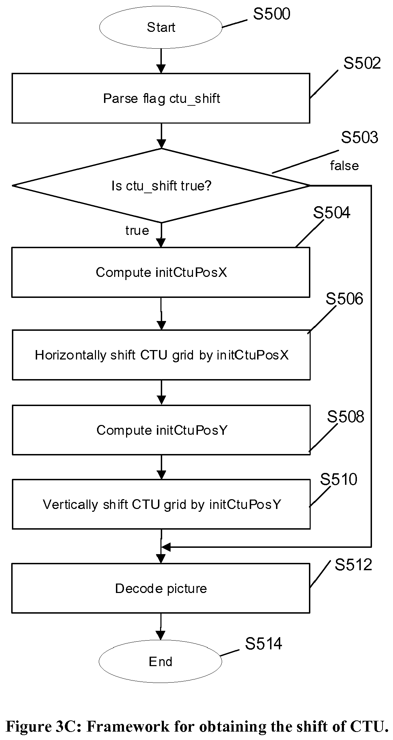

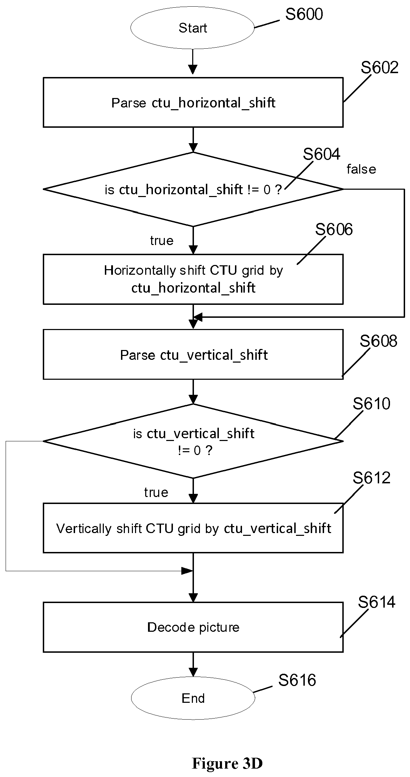

**Figure 3A** illustrates a flowchart of an encoding method according to one embodiment. Initial positions in horizontal and vertical directions for CTUs are computed. If not zero, syntax elements (e.g. flags) can be encoded to inform the decoder of the shift, as depicted with dashed boxes (S108, S116). The dashed boxes are optional. In a variant, wherein the shifting process is applied without requiring the decoding of shift related information, the dashed boxes are not included. In one embodiment that relates to the decoder process depicted in figure 3C, those syntax elements can be one flag ctu_shift that is initialized to zero (0) and set to one (1) if either or both initCtuPosX and initCtuPosY are non-zero. In this case, the decoder derives the shift values in the same way as the encoder. In another embodiment, the syntax elements can consist of flags (e.g. ctu_shift_x and ctu_shift_y) that can activate the horizontal and vertical shifts independently. In the latter case, the decoder derives the shift values the same way as the encoder. In another embodiment that relates to the decoder process depicted in figure 3D, those syntax elements can be ctu_horizontal_shift and ctu_vertical_shift, providing the information on shift values.

The encoding method starts at step S100. At step 102, the method computes using (eq.1) the initial horizontal position of the top left corner of the first column of CTUs initCtuPosX. If initCtuPosX is not equal to zero, i.e. *PictureWidth* is not a multiple of *CtuWidth* and the following applies:

All CTUs are shifted by *initCtuPosX*, which is a negative number, at S106.

A syntax ctu_vertical_shift is optionally encoded in the bitstream to indicate this shift to the decoder at Step S108. It can be either a flag that indicate to the decoder to calculate the shift from the other variables, or a syntax element that directly gives the value of the shift.

The same process then applies to the vertical coordinate from step S110 to step S116. The initial vertical position of the top left corner of the first column of CTUs initCtuPosY is computed using (eq. 2).

The picture (or slice/tile) is encoded using the updated grid of CTUs at Step S118.

The method ends at step S120.

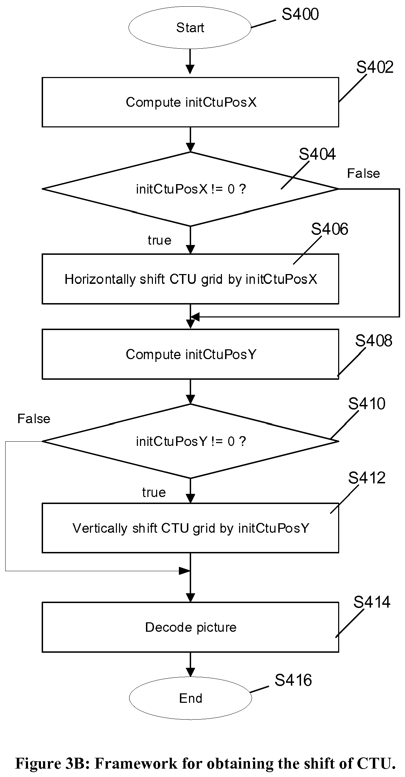

**Figure 3B** illustrates a flowchart of a decoding method according to one embodiment. The method starts at step S400. At S402, the method computes the initial horizontal position of the top left corner of the first column of CTUs initCtuPosX in the same way as the encoder (S102). In the case where initCtuPosX is equal to 0, the method continues to S408, otherwise the method continues to S406. At S406, the CTU grid is shifted horizontally by initCtuPosX. In this embodiment, the CTU shift values are not decoded from the bitstream but are determined on the decoder side in the same way as on the encoder side using (eq. 1) and (eq.2).

The same process then applies to the vertical coordinate from step S408 to step S412. The picture (or slice/tile) is decoded using the updated grid of CTUs at S414.

The method ends at step S416.

**Figure 3C** illustrates a flowchart of a decoding method according to one embodiment. The method starts at step S500. At step S502, a flag ctu_shift is parsed. In the case where (S503) the flag is true (e.g. ctu_shift is equal to 1), the method continues at S504. Otherwise the method continues at S512. At S504, the method computes the initial horizontal position of the top left corner of the first column of CTUs initCtuPosX in the same way as the encoder (S102). At S506, the CTU grid is shifted horizontally by initCtuPosX. The same process then applies to the vertical coordinate from step S506 to step S510. The picture (or slice/tile) is decoded using the updated grid of CTUs at S512. The method ends at step S514.

In a variant, two flags (ctu_shift_x and ctu_shift_y) are parsed at S502, one for the horizontal direction and one for the vertical direction. At step S503, in the case where ctu_shift_x is true, the method continues at S504. Otherwise the method continues at S507 (not represented). S507 is located between S506 and S508. At S507, it is checked whether ctu_shift_y is true. In the case where ctu_shift_y is true, the method continues at S508. Otherwise the method continues at S512.

**Figure 3D** illustrates a flowchart of a decoding method according to one embodiment. The method starts at step S600.

At step S602, the syntax element ctu_horizontal_shift is parsed, namely decoded. In the case where ctu_horizontal_shift is not equal to 0, the method continues at S606. Otherwise the method continues at S608. At S606, the CTU grid is shifted horizontally by ctu_horizontal_shift. The same process then applies to the vertical coordinate from step S608 to step S612. The picture (or slice/tile) is decoded using the updated grid of CTUs at S614. The method ends at step S616.

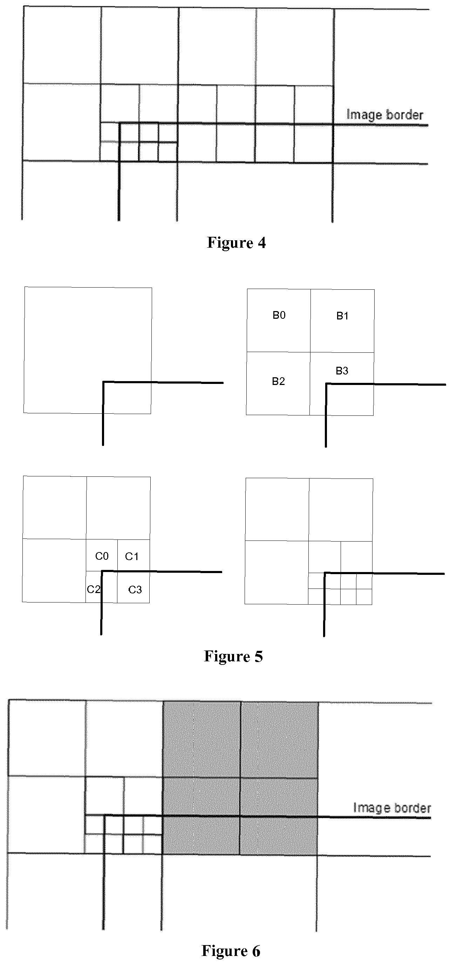

**Figure 4** depicts the splitting of a CTU into CUs according to one embodiment. Indeed, once the CTU grid is shifted using the embodiments disclosed with reference to figures 3A-3D, the CTUs are further split into CUs. On Figure 4, an example of CTUs split in the top left area of the picture is shown. It can be seen that the first two CTUs at the top left are split into smaller square CUs. This partitioning is typical of HEVC in intra. Let consider the top left CTU is first split into 4 sub-blocks, as described in **Figure 5**. In raster scan order, the first 3 blocks do not contain any part of the picture. The last one is not fully included in the picture, it can be then further split to obtain sub blocks/CUs that are either outside or fully included in the picture.

In one embodiment, the splitting process is slightly changed since the decoder now has to check whether the top left pixel and the bottom right pixels of the blocks are located inside the picture.

In the case where both top left and bottom right pixels are outside the picture (e.g. blocks B0, B1, B2, C0 and C1), then the next block is processed.

In the case where only the top left pixel is outside the picture (e.g. B3 and C2), then implicit split into smaller blocks.

In the case where both the top left and bottom right pixels (e.g. C3) are inside the picture, then continue with the classical rules of splitting.

**Figure 6** depicts another exemplary top left area of a picture. In this example, the second CTU (grey area) is first split in 4 square blocks as previously described in Figure 4. However, at the second level of split, the blocks are horizontally split into 2 rectangular blocks. This case is derived from the handling of the right and bottom borders of the future standard currently under study. This example shows that at least one embodiment can be adapted to future video compression schemes that rely on a partitioning of the pictures into CTUs which are then divided in smaller blocks for coding.

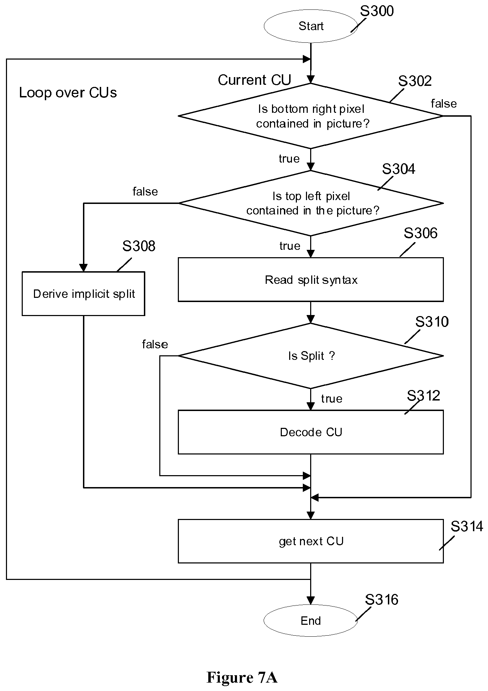

**Figure 7A** depicts a flowchart of a decoding method according to an embodiment. More precisely, Figure 7A illustrates the partitioning of a CTU into CUs at the decoder side. For each CU, implicit splits are derived considering pixel locations. The process for deriving implicit split depends on the policy of each codec. As explained above, HEVC would implicitly split into smaller square blocks only (as on Figure 5), whereas the future H.266/VVC will be able to split into non-square blocks (e.g. rectangles) in the case where it better fits the border topology (as in Figure 6).

The method starts at step S300 with a current CTU as input, which basically corresponds to a root CU. At S302, the location of the bottom right pixel BRP of the current CU is checked. If BRP is outside of the picture, the next CU is fetched at step S314. If BRP is contained in the picture, the location of top left pixel TLP of the CU is checked. If TLP is outside of the picture, i.e. the CU is not fully contained in the picture, the CU is automatically split into sub-CUs following an implicit split method at step S308. No syntax is necessary since the decoder follows the same method as the encoder. If the TLP is in the picture (i.e. the CU is fully contained in the picture), the classical partitioning of the compression framework is applied. A syntax indicating the split mode is parsed at step S306. If it is split (S310), the next sub-CU is accessed, if not, the current CU is decoded. When no more CU can be fetched at step S314, the process ends at S316 with a decoded CTU.

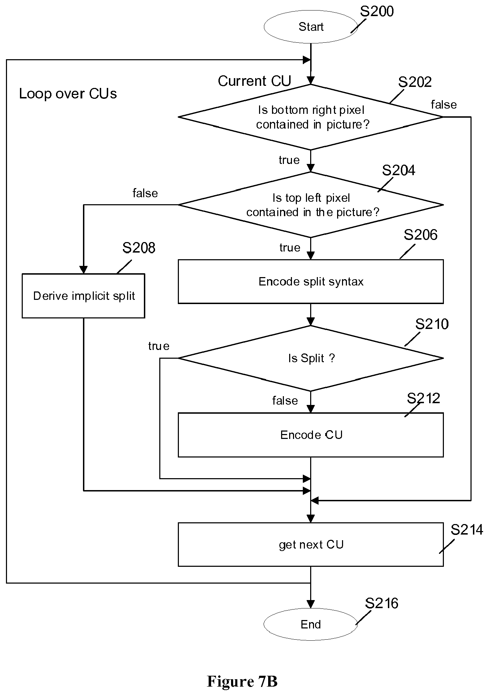

**Figure 7B** depicts a flowchart of an encoding method according to an embodiment. More precisely, Figure 7A illustrates the partitioning of a CTU into CUs at the encoder side.

The method starts at step S200 with a current CTU as input, which basically corresponds to a root CU. At S202, the location of the bottom right pixel BRP of the current CU is checked. If BRP is outside of the picture, the next CU is fetched at step S214. If BRP is contained in the picture, the location of top left pixel TLP of the CU is checked. If TLP is outside of the picture, i.e. the CU is not fully contained in the picture, the CU is automatically split into sub-CUs following an implicit split method at step S208. No syntax is necessary since the decoder follows the same method as the encoder. If the TLP is in the picture (i.e. the CU is fully contained in the picture), the classical partitioning of the compression framework, that is usually RDO based, is applied. A syntax indicating the split mode is encoded at step S206. If it is split (S210), the next sub-CU is accessed, if not, the current CU is decoded. When no more CU can be fetched at step S214, the process ends at S216 with a decoded CTU.

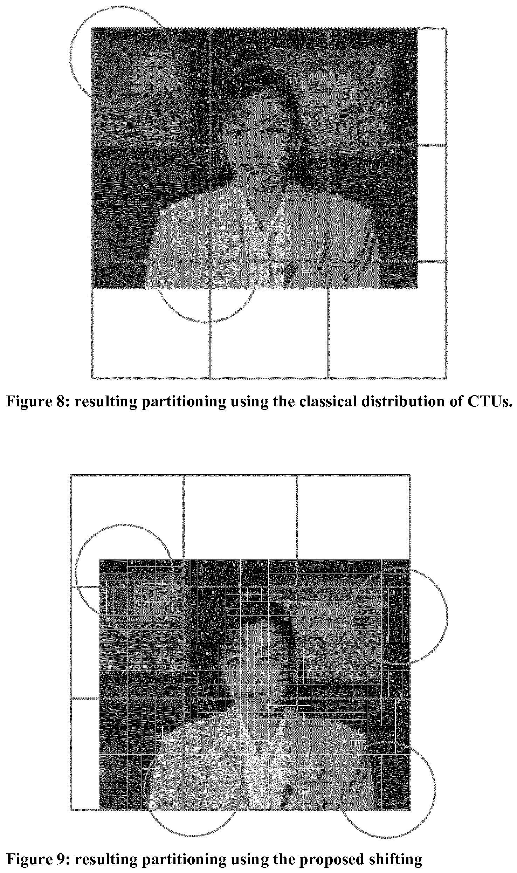

**Figure 8** presents a classical partitioning of the first frame of 176x144 sequence Akiyo coded in intra mode. The CTUs are depicted with thick lines. One can notice that in the highlighted top left area, the first CTU is split into small blocks, due to the previously explained lack of relevant reference samples for prediction. At the bottom and the right of the image, small blocks are implicitly derived because of CTU borders, although smooth textures are present. Such textures are usually coded using bigger blocks. This issue is addressed by at least one embodiment as shown in **Figure 9**, where bigger blocks can be considered at the right and left borders of the picture. Smaller blocks are also derived at the top left of the picture, but the constrains brought by the CTU distribution do not have a big impact since the classical RDO would split them anyway, as shown in Figure 8.

At least one embodiment optimizes the position of the grid of CTUs. several decoder embodiments are considered:

1. Determining a shift of the CTU grid and shifting the grid according to this shift.

2. Determining the shift on the decoder side may comprise decoding horizontal and/or vertical shift from the bitstream or determining the shifts from an index (as in point 4) or determining them from parameters known by the decoder, e.g. picture height/width, CTU size, etc.

3. Decoding a syntax element or flag (ctu_shift, ctu_shift_x, ctu_shift_y), that indicates (e.g. ctu_shift =1) to the decoder to look for the proper shift, leading to an alignment of CTUs on the right and bottom border, or to use default top-left alignment (e.g. ctu_shift=0). the flag may be coded for the whole sequence (e.g. in the SPS) or may be coded per picture or slice (e.g. in the PPS or slice/picture header).

4. Decoding a syntax element (ctu_shift), that indicates (e.g. ctu_shift=1) to align the grid of CTUs on the right and bottom border, to align the grid of CTUs on the top and left border (e.g. ctu_shift=2) or to center the grid of CTUs (e.g. ctu_shift=0). In this case there is no need to transmit the horizontal and vertical shift values.

5. The future video standard can directly specify that the decoder looks for such an alignment of the CTUs, without requiring any additional syntax. Advantageously, this flag or syntax element (ctu_shift, ctu_vertical_shift and ctu_horizontal_shift) may be inferred from another syntax element such as the slice type (e.g. intra slices, ctu_shift=1, inter slices, ctu_shift =0).

6. Two syntax elements, e.g. ctu_vertical_shift and ctu_horizontal_shift, are encoded in the bitstream, enabling the decoder to shift the grid of CTUs in the same manner as the encoder.

Besides, encoder embodiments are also considered:

1. The encoder may have a pre-processor module which analyzes the original pictures to derive the value of ctu_shift, and possibly the horizontal and vertical shift values. The latter values may be encoded or not. If not encoded the horizontal and vertical shift values can be derived by the decoder as made by the encoder.

2. For example, for intra pictures, if the first line and/or row of initial CTUs have homogeneous low spatial frequencies, i.e. flat regions easy to encode/predict, then ctu_shift is set to zero. If this area contains high spatial frequencies, then ctu_shift is set to one.

3. In inter, if the content of bordering initial CTUs is well predicted via motion compensation or others, i.e. the obtained residual has low energy, then ctu_shift is set to zero, else it is set to one.

4. The pre-processor can analyze the content around the frame borders to output the optimal CTU shifting, horizontally and vertically.

This application describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

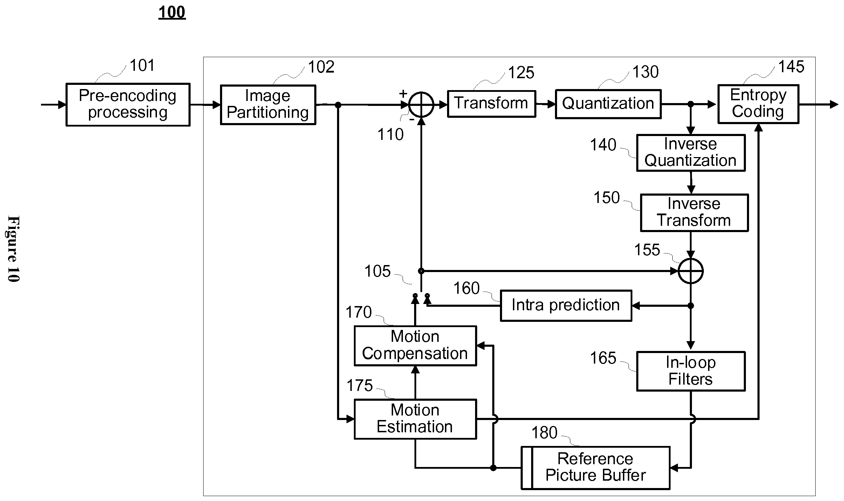

The aspects described and contemplated in this application can be implemented in many different forms. Figures 10, 11 and 12 below provide some embodiments, but other embodiments are contemplated and the discussion of Figures 10, 11 and 12 does not limit the breadth of the implementations. At least one of the aspects generally relates to video encoding and decoding, and at least one other aspect generally relates to transmitting a bitstream generated or encoded. These and other aspects can be implemented as a method, an apparatus, a computer readable storage medium having stored thereon instructions for encoding or decoding video data according to any of the methods described, and/or a computer readable storage medium having stored thereon a bitstream generated according to any of the methods described.

Various methods are described herein, and each of the methods comprises one or more steps or actions for achieving the described method. Unless a specific order of steps or actions is required for proper operation of the method, the order and/or use of specific steps and/or actions may be modified or combined.

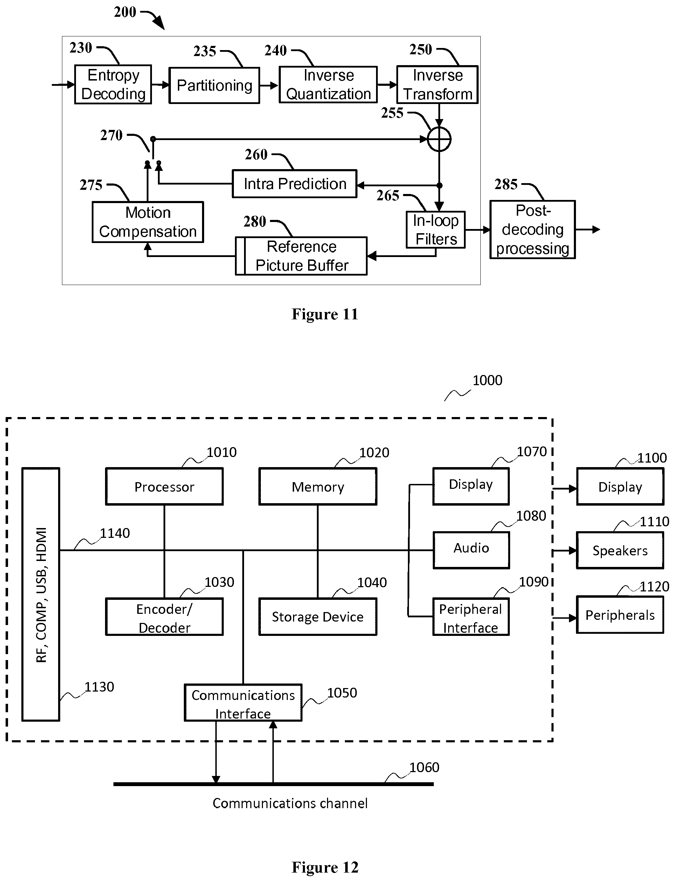

Various methods and other aspects described in this application can be used to modify modules, for example, the partitioning modules (102, 235), of a video encoder 100 and decoder 200 as shown in Figure 10 and Figure 11. Moreover, the present aspects are not limited to VVC or HEVC, and can be applied, for example, to other standards and recommendations, whether pre-existing or future-developed, and extensions of any such standards and recommendations (including VVC and HEVC). Unless indicated otherwise, or technically precluded, the aspects described in this application can be used individually or in combination.

Various numeric values are used in the present application. The specific values are for example purposes and the aspects described are not limited to these specific values.

**Figure 10** illustrates an encoder 100. Variations of this encoder 100 are contemplated, but the encoder 100 is described below for purposes of clarity without describing all expected variations.

Before being encoded, the video sequence may go through pre-encoding processing (101), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the pre-processing, and attached to the bitstream.

In the encoder 100, a picture is encoded by the encoder elements as described below. The picture to be encoded is partitioned (102) and processed in units of, for example, CUs. Each unit is encoded using, for example, either an intra or inter mode. When a unit is encoded in an intra mode, it performs intra prediction (160). In an inter mode, motion estimation (175) and compensation (170) are performed. The encoder decides (105) which one of the intra mode or inter mode to use for encoding the unit, and indicates the intra/inter decision by, for example, a prediction mode flag. Prediction residuals are calculated, for example, by subtracting (110) the predicted block from the original image block.

The prediction residuals are then transformed (125) and quantized (130). The quantized transform coefficients, as well as motion vectors and other syntax elements, are entropy coded (145) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (140) and inverse transformed (150) to decode prediction residuals. Combining (155) the decoded prediction residuals and the predicted block, an image block is reconstructed. In-loop filters (165) are applied to the reconstructed picture to perform, for example, deblocking/SAO (Sample Adaptive Offset) filtering to reduce encoding artifacts. The filtered image is stored at a reference picture buffer (180).

**Figure 11** illustrates a block diagram of a video decoder 200. In the decoder 200, a bitstream is decoded by the decoder elements as described below. Video decoder 200 generally performs a decoding pass reciprocal to the encoding pass as described in Figure 12. The encoder 100 also generally performs video decoding as part of encoding video data.

In particular, the input of the decoder includes a video bitstream, which can be generated by video encoder 100. The bitstream is first entropy decoded (230) to obtain transform coefficients, motion vectors, and other coded information. The picture partition information indicates how the picture is partitioned. The decoder may therefore divide (235) the picture according to the decoded picture partitioning information. The transform coefficients are de-quantized (240) and inverse transformed (250) to decode the prediction residuals. Combining (255) the decoded prediction residuals and the predicted block, an image block is reconstructed. The predicted block can be obtained (270) from intra prediction (260) or motion-compensated prediction (i.e., inter prediction) (275). In-loop filters (265) are applied to the reconstructed image. The filtered image is stored at a reference picture buffer (280).

The decoded picture can further go through post-decoding processing (285), for example, an inverse color transform (e.g. conversion from YCbCr 4:2:0 to RGB 4:4:4) or an inverse remapping performing the inverse of the remapping process performed in the pre-encoding processing (101). The post-decoding processing can use metadata derived in the pre-encoding processing and signaled in the bitstream.

**Figure 12** illustrates a block diagram of an example of a system in which various aspects and embodiments are implemented. System 1000 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 1000, singly or in combination, can be embodied in a single integrated circuit (IC), multiple ICs, and/or discrete components. For example, in at least one embodiment, the processing and encoder/decoder elements of system 1000 are distributed across multiple ICs and/or discrete components. In various embodiments, the system 1000 is communicatively coupled to one or more other systems, or other electronic devices, via, for example, a communications bus or through dedicated input and/or output ports. In various embodiments, the system 1000 is configured to implement one or more of the aspects described in this document.

The system 1000 includes at least one processor 1010 configured to execute instructions loaded therein for implementing, for example, the various aspects described in this document. Processor 1010 can include embedded memory, input output interface, and various other circuitries as known in the art. The system 1000 includes at least one memory 1020 (e.g., a volatile memory device, and/or a non-volatile memory device). System 1000 includes a storage device 1040, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 1040 can include an internal storage device, an attached storage device (including detachable and non-detachable storage devices), and/or a network accessible storage device, as non-limiting examples.

System 1000 includes an encoder/decoder module 1030 configured, for example, to process data to provide an encoded video or decoded video, and the encoder/decoder module 1030 can include its own processor and memory. The encoder/decoder module 1030 represents module(s) that can be included in a device to perform the encoding and/or decoding functions. As is known, a device can include one or both of the encoding and decoding modules. Additionally, encoder/decoder module 1030 can be implemented as a separate element of system 1000 or can be incorporated within processor 1010 as a combination of hardware and software as known to those skilled in the art.

Program code to be loaded onto processor 1010 or encoder/decoder 1030 to perform the various aspects described in this document can be stored in storage device 1040 and subsequently loaded onto memory 1020 for execution by processor 1010. In accordance with various embodiments, one or more of processor 1010, memory 1020, storage device 1040, and encoder/decoder module 1030 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 1010 and/or the encoder/decoder module 1030 is used to store instructions and to provide working memory for processing that is needed during encoding or decoding. In other embodiments, however, a memory external to the processing device (for example, the processing device can be either the processor 1010 or the encoder/decoder module 1030) is used for one or more of these functions. The external memory can be the memory 1020 and/or the storage device 1040, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 1000 can be provided through various input devices as indicated in block 1130. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 10, include composite video.

In various embodiments, the input devices of block 1130 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and bandlimited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 1000 to other electronic devices across USB and/or HDMI connections. It is to be understood that various aspects of input processing, for example, Reed-Solomon error correction, can be implemented, for example, within a separate input processing IC or within processor 1010 as necessary. Similarly, aspects of USB or HDMI interface processing can be implemented within separate interface ICs or within processor 1010 as necessary. The demodulated, error corrected, and demultiplexed stream is provided to various processing elements, including, for example, processor 1010, and encoder/decoder 1030 operating in combination with the memory and storage elements to process the datastream as necessary for presentation on an output device.

Various elements of system 1000 can be provided within an integrated housing, Within the integrated housing, the various elements can be interconnected and transmit data therebetween using suitable connection arrangement, for example, an internal bus as known in the art, including the Inter-IC (I2C) bus, wiring, and printed circuit boards.

The system 1000 includes communication interface 1050 that enables communication with other devices via communication channel 1060. The communication interface 1050 can include, but is not limited to, a transceiver configured to transmit and to receive data over communication channel 1060. The communication interface 1050 can include, but is not limited to, a modem or network card and the communication channel 1060 can be implemented, for example, within a wired and/or a wireless medium.

Data is streamed, or otherwise provided, to the system 1000, in various embodiments, using a wireless network such as a Wi-Fi network, for example IEEE 802.11 (IEEE refers to the Institute of Electrical and Electronics Engineers). The Wi-Fi signal of these embodiments is received over the communications channel 1060 and the communications interface 1050 which are adapted for Wi-Fi communications. The communications channel 1060 of these embodiments is typically connected to an access point or router that provides access to external networks including the Internet for allowing streaming applications and other over-the-top communications. Other embodiments provide streamed data to the system 1000 using a set-top box that delivers the data over the HDMI connection of the input block 1130. Still other embodiments provide streamed data to the system 1000 using the RF connection of the input block 1130. As indicated above, various embodiments provide data in a non-streaming manner. Additionally, various embodiments use wireless networks other than Wi-Fi, for example a cellular network or a Bluetooth network.

The system 1000 can provide an output signal to various output devices, including a display 1100, speakers 1110, and other peripheral devices 1120. The display 1100 of various embodiments includes one or more of, for example, a touchscreen display, an organic light-emitting diode (OLED) display, a curved display, and/or a foldable display. The display 1100 can be for a television, a tablet, a laptop, a cell phone (mobile phone), or other device. The display 1100 can also be integrated with other components (for example, as in a smart phone), or separate (for example, an external monitor for a laptop). The other peripheral devices 1120 include, in various examples of embodiments, one or more of a stand-alone digital video disc (or digital versatile disc) (DVR, for both terms), a disk player, a stereo system, and/or a lighting system. Various embodiments use one or more peripheral devices 1120 that provide a function based on the output of the system 1000. For example, a disk player performs the function of playing the output of the system 1000.

In various embodiments, control signals are communicated between the system 1000 and the display 1100, speakers 1110, or other peripheral devices 1120 using signaling such as AV.Link, Consumer Electronics Control (CEC), or other communications protocols that enable device-to-device control with or without user intervention. The output devices can be communicatively coupled to system 1000 via dedicated connections through respective interfaces 1070, 1080, and 1090. Alternatively, the output devices can be connected to system 1000 using the communications channel 1060 via the communications interface 1050. The display 1100 and speakers 1110 can be integrated in a single unit with the other components of system 1000 in an electronic device such as, for example, a television. In various embodiments, the display interface 1070 includes a display driver, such as, for example, a timing controller (T Con) chip.

The display 1100 and speaker 1110 can alternatively be separate from one or more of the other components, for example, if the RF portion of input 1130 is part of a separate set-top box. In various embodiments in which the display 1100 and speakers 1110 are external components, the output signal can be provided via dedicated output connections, including, for example, HDMI ports, USB ports, or COMP outputs.

The embodiments can be carried out by computer software implemented by the processor 1010 or by hardware, or by a combination of hardware and software. As a non-limiting example, the embodiments can be implemented by one or more integrated circuits. The memory 1020 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1010 can be of any type appropriate to the technical environment, and can encompass one or more of microprocessors, general purpose computers, special purpose computers, and processors based on a multi-core architecture, as non-limiting examples.

Various implementations involve decoding. "Decoding", as used in this application, can encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application, for example, determining at least one shift of the CTU grid.

As further examples, in one embodiment "decoding" refers only to entropy decoding, in another embodiment "decoding" refers only to differential decoding, and in another embodiment "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this application, for example, determining at least one shift of the CTU grid.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that the syntax elements as used herein, for example, ctu_shift, ctu_vertical_shift, ctu_horizontal_shift, are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Various embodiments refer to rate distortion optimization. In particular, during the encoding process, the balance or trade-off between the rate and distortion is usually considered, often given the constraints of computational complexity. The rate distortion optimization is usually formulated as minimizing a rate distortion function, which is a weighted sum of the rate and of the distortion. There are different approaches to solve the rate distortion optimization problem. For example, the approaches may be based on an extensive testing of all encoding options, including all considered modes or coding parameters values, with a complete evaluation of their coding cost and related distortion of the reconstructed signal after coding and decoding. Faster approaches may also be used, to save encoding complexity, in particular with computation of an approximated distortion based on the prediction or the prediction residual signal, not the reconstructed one. Mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, , a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

**EP 3 641 311 A1**

It is to be appreciated that the use of any of the following "/", "and/or", and "at least one of', "one or more of' for example, in the cases of "A/B", "A and/or B" and "at least one of A and B", "one or more of A and B" is intended to encompass the selection of the first listed option (A) only, or the selection of the second listed option (B) only, or the selection of both options (A and B). As a further example, in the cases of "A, B, and/or C" and "at least one of A, B, and C", "one or more of A, B and C" such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a particular one of vertical or horizontal shifts of the CTU grid. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

We describe a number of embodiments. Features of these embodiments can be provided alone or in any combination. Further, embodiments can include one or more of the following features, devices, or aspects, alone or in any combination, across various claim categories and types:

- Determining a shift of the CTU grid and shifting the grid according to this shift.
- Determining the shift(s) on the decoder side may comprise decoding horizontal and/or vertical shift from the bitstream.
- Determining the shift(s) on the decoder side may comprise determining the shifts directly from an index encoded in the bitstream.
- Determining the shift(s) on the decoder side from parameters known by the decoder, e.g. picture height/width, CTU size, etc.
- Decoding a syntax element or flag that indicates to the decoder to look for the proper shift. The flag may be coded for the whole sequence (e.g. in the SPS) or may be coded per picture or slice (e.g. in the PPS or slice/picture header). The flag may be inferred from another syntax element such as the slice type.
- The shift may align the grid of CTUs on the right and bottom border, on the top and left border, or center it in the picture.
- Decoding a syntax element that indicates directly to align the grid of CTUs on the right and bottom border, to align the grid of CTUs on the top and left border or to center the grid of CTUs. In this case there is no need to transmit horizontal and vertical shift values.
- A future video standard can directly specify that the decoder looks for such an alignment of the CTUs, without requiring any additional syntax.
- Two syntax elements, e.g. ctu_vertical_shift and ctu_horizontal_shift, are encoded in the bitstream, enabling the decoder to shift the grid of CTUs in the same manner as the encoder.
- A bitstream or signal that includes one or more of the described syntax elements, or variations thereof.
- Inserting in the signaling syntax elements that enable the decoder to shift the CTU grid in a manner corresponding to that used by an encoder.
- Creating and/or transmitting and/or receiving and/or decoding a bitstream or signal that includes one or more of the described syntax elements, or variations thereof.
- A TV, set-top box, cell phone, tablet, or other electronic device that performs CTU grid shifting according to any of the embodiments described.
- A TV, set-top box, cell phone, tablet, or other electronic device that performs CTU grid shifting according to any of the embodiments described, and that displays (e.g. using a monitor, screen, or other type of display) a resulting image.
- A TV, set-top box, cell phone, tablet, or other electronic device that tunes (e.g. using a tuner) a channel to receive a signal including an encoded image, and performs CTU grid shifting according to any of the embodiments described.

- A TV, set-top box, cell phone, tablet, or other electronic device that receives (e.g. using an antenna) a signal over the air that includes an encoded image, and performs CTU grid shifting according to any of the embodiments described.

**Claims**

1. A decoding method comprising:

   - obtaining at least one shift of a grid of non-overlapping blocks in a picture and shifting the grid responsive to said shift; and
   - decoding each non-overlapping block in the picture using the shifted grid.

2. The method of claim 1, wherein the grid of non-overlapping blocks is a grid of coding tree units.

3. The method of claim 1 or 2, wherein the grid is shifted so that said grid is aligned on the bottom right border of the picture, is centered on the picture or is aligned on the top left border of the picture.

4. The method of any one of claims 1 to 3, wherein obtaining at least one shift of said grid comprises decoding one or more of a vertical shift value and a horizontal shift value from a bitstream.

5. The method of any one of claims 1 to 3, wherein obtaining at least one shift of said grid comprises determining one or more of a vertical shift and a horizontal shift.

6. The method of claim 5, wherein determining one or more of a vertical shift and a horizontal shift comprises decoding an index and further determining one or more of said vertical shift and said horizontal shift directly from said index.

7. The method of claim 5, wherein determining one or more of a vertical shift and a horizontal shift comprises determining said vertical shift responsive to one or more of a picture height and a picture height and determining said horizontal shift responsive to one or more of a block height and a block width.

8. An encoding method comprising:

   - obtaining at least one shift of a grid of non-overlapping blocks in a picture and shifting the grid responsive to said shift; and
   - encoding each non-overlapping block in the picture using the shifted grid.

9. The method of claim 8, wherein the grid of non-overlapping blocks is a grid of coding tree units.

10. The method of claim 8 or 9, wherein the grid is shifted so that said grid is aligned on the bottom right border of the picture, is centered on the picture or is aligned on the top left border of the picture.

11. The method of any one of claims 8 to 10, wherein obtaining at least one shift of said grid comprises determining one or more of a vertical shift and a horizontal shift.

12. The method of claim 11, wherein determining one or more of a vertical shift and a horizontal shift comprises determining said vertical shift responsive to one or more of a picture height and a picture height and determining said horizontal shift responsive to one or more of a block height and a block width.

13. The method of any one of claims 8 to 11, wherein said method further comprises encoding one or more of a vertical shift value and a horizontal shift value in a bitstream.

14. The method of any one of claims 8 to 11, wherein said method further comprises encoding an index in a bitstream directly representative of one or more of said vertical shift and said horizontal shift.

15. A decoding apparatus comprising one or more processors configured to perform:

- obtaining at least one shift of a grid of non-overlapping blocks in a picture and shifting the grid responsive to said shift; and
- decoding each non-overlapping block in the picture using the shifted grid.

16. An encoding apparatus comprising one or more processors configured to perform:

- obtaining at least one shift of a grid of non-overlapping blocks in a picture and shifting the grid responsive to said shift; and
- encoding each non-overlapping block in the picture using the shifted grid.

CtuWidth

PictureWidth

CtuHeight

PictureHeight

**Figure 1A**

CtuWidth

FirstCtuWidth

FirstCtuHeight

CtuHeight

PictureHeight

PictureWidth

**Figure 1B**

S10

Start

S12

Obtaining at least one shift of a grid of non-overlapping blocks in a picture

S14

shifting the grid responsive to said shift

S16

decoding each non-overlapping block in the picture using the shifted grid

S18

End

**Figure 2A**

S20

Start

S22

Obtaining at least one shift of a grid of non-overlapping blocks in a picture

S24

shifting the grid responsive to said shift

S26

encoding each non-overlapping block in the picture using the shifted grid

S28

End

**Figure 2B**

**Figure 3A: Framework for encoding the shift of CTU.**

**Figure 3B: Framework for obtaining the shift of CTU.**

S500

Start

S502

Parse flag ctu_shift

S503

false

Is ctu_shift true?

true

S504

Compute initCtuPosX

S506

Horizontally shift CTU grid by initCtuPosX

S508

Compute initCtuPosY

S510

Vertically shift CTU grid by initCtuPosY

S512

Decode picture

S514

End

**Figure 3C: Framework for obtaining the shift of CTU.**

S600

Start

S602

Parse ctu_horizontal_shift

S604

is ctu_horizontal_shift != 0 ?

false

true

S606

Horizontally shift CTU grid by
ctu_horizontal_shift

S608

Parse ctu_vertical_shift

S610

is ctu_vertical_shift
!= 0 ?

true

S612

Vertically shift CTU grid by ctu_vertical_shift

S614

Decode picture

S616

End

**Figure 3D**

**Figure 4**

**Figure 5**

**Figure 6**

Figure 7A

Figure 7B

**Figure 8: resulting partitioning using the classical distribution of CTUs.**

**Figure 9: resulting partitioning using the proposed shifting**

**Figure 10**

**Figure 11**

**Figure 12**

Europäisches
Patentamt

European
Patent Office

Office européen
des brevets

## EUROPEAN SEARCH REPORT

**Application Number**

EP 18 30 6368

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PANUSOPONE K ET AL: "Flexible picture partitioning", 94. MPEG MEETING; 11-10-2010 - 15-10-2010; GUANGZHOU; (MOTION PICTURE EXPERT GROUP OR ISO/IEC JTC1/SC29/WG11),, no. M18301, 10 October 2010 (2010-10-10), XP030046891, * the whole document * | 1-16 | INV. H04N19/119 H04N19/172 H04N19/96 H04N19/463 H04N19/16 |
| A | TIZIANO BIANCHI ET AL: "Detection of Nonaligned Double JPEG Compression Based on Integer Periodicity Maps", IEEE TRANSACTIONS ON INFORMATION FORENSICS AND SECURITY, IEEE, PISCATAWAY, NJ, US, vol. 7, no. 2, 1 April 2012 (2012-04-01), pages 842-848, XP011433664, ISSN: 1556-6013, DOI: 10.1109/TIFS.2011.2170836 * the whole document * | 1-16 | |

**TECHNICAL FIELDS SEARCHED (IPC)**

H04N

The present search report has been drawn up for all claims

| Place of search | Date of completion of the search | Examiner |
|---|---|---|
| Munich | 12 February 2019 | Cyranka, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)